Europäisches Patentamt

European Patent Office

Office européen des brevets

(19)

(11) Publication number: **0 090 483 B2**

# (12) NEW EUROPEAN PATENT SPECIFICATION

(45) Date of publication of the new patent specification : **21.08.91 Bulletin 91/34**

(51) Int. Cl.⁵ : **B01D 69/00**

(21) Application number : **83300518.4**

(22) Date of filing : **02.02.83**

---

(54) Polyamide membrane and process for its production.

---

The file contains technical information submitted after the application was filed and not included in this specification

(30) Priority : **05.02.82 US 346119**

(43) Date of publication of application : **05.10.83 Bulletin 83/40**

(45) Publication of the grant of the patent : **30.07.86 Bulletin 86/31**

(45) Mention of the opposition decision : **21.08.91 Bulletin 91/34**

(84) Designated Contracting States : **BE DE IT NL SE**

(56) References cited :
**EP-A- 0 005 536**
**EP-A- 0 050 789**

(56) References cited :
**EP-A- 0 050 864**
**US-A- 2 926 154**
**US-A- 3 224 986**
**US-A- 4 340 479**

(73) Proprietor : **PALL· CORPORATION**
**30 Sea Cliff Avenue**
**Glen Cove New York 11542 (US)**

(72) Inventor : **Gsell, Thomas Charles**
**9 Grace Lane**
**Levittown New York 11756 (US)**
Inventor : **Joffee, Irving Brian**
**19 Clearview Street**
**Huntington New York 11743 (US)**
Inventor : **Degen, Peter John**
**24 Glades Way**
**Huntington New York 11743 (US)**

(74) Representative : **Corin, Christopher John et al**
**Mathisen Macara & Co. The Coach House 6-8**
**Swakeleys Road**
**Ickenham Uxbridge UB10 8BZ (GB)**

EP 0 090 483 B2

## Description

The present invention relates to microporous membranes, and their preparation. Microporous membranes have been recognised for some time as useful for filtering fine particles from gas and liquid media. United States Patent Specification no. 4,340,479, discloses a process for manufacturing microporous polyamide membranes with certain desirable filtration characteristics. Membranes prepared by this process are hydrophilic, have narrow pore size distributions and pore ratings as fine as about 0.04 micrometer. For many filtering requirements those membranes perform very effectively. For certain fine particulates, e.g., substantially below 0.1 micrometer in diameter, they are not effective. The reasons for this are related to the mechanisms by which filters work.

Similar remarks and those which follow also apply to membranes as described in EP A-O 050 864. These membranes are cationic charge-modified and comprise a hydrophilic organic polymeric microporous membrane and a charge-modifying agent bonded to substantially all of the wetted surfaces of the membrane, the primary charge modifying agent being a water soluble organic polymer having a molecular weight greater than about 1000, wherein each monomer thereof has at least one epoxide group capable of bonding to the surface of the membrane and at least one tertiary amine or quaternary ammonium group.

Superficially, EP-A 0 050 864 describes a membrane in which the charge-modifying agent bonds throughout the thickness of the membrane. The process for achieving this alleged homogeneity simply requires that a prepared hydrophilic polymeric microporous membrane should be immersed in an aqueous solution of a water soluble organic polymer having a molecular weight greater than about 1000. Tests on membranes in accordance with preferred embodiments of this prior specification show, however, that the modifying agent does not, in fact, become distributed homogeneously throughout the thickness of the membrane. As a result the rate at which high resistivity is achieved is appreciably lower than is desirable from the point of view of high output with a reasonable amount of equipment. Corresponding disadvantages will be encountered when other fluids are filtered.

The function of a filter is the removal of suspended particulate material and the passage of the clarified fluid medium. A filter membrane can achieve fluid clarification by different mechanisms. Particulate material can be removed through mechanical sieving wherein all particles larger than the pore diameter of the filter membrane are removed from the fluid. With this mechanism, filtration efficiency is controlled by the relative size of the contaminant and filter pore diameter and the efficient removal of very small particles, e.g., less than 0.1 micrometer, in diameter, therefore requires filter membranes with very small pore sizes.

Such fine pore filter membranes tend to have the undesirable characteristics of high pressure drop across the filter membrane, reduced dirt capacity and shortened filter life.

A filter may also remove suspended particulate material by adsorption onto the filter membrane surfaces. Removal of particulate material by this mechanism is controlled by the surface characteristics of (1) the suspended particulate material and (2) the filter membrane. Most suspended solids which are commonly subjected to removal by filtration are negatively charged in aqueous systems. This feature has long been recognized in water treatment processes where cationic flocculating agents, oppositely charged to the suspended matter, are employed to improve settling efficiences during water clarification.

Colloid stability theory can be used to predict the interactions of electrostatically charged particles and surfaces. If the charges of suspended particle and the filter membrane surface are of like sign and with zeta potentials of greater than about 20 mV, mutual repulsive forces will be sufficiently strong to prevent capture by adsorption. If the zeta potentials of the suspended particle and the filter membrane surface are small, or more desirably of opposite sign, particles will tend to adhere to the filter membrane surfaces with high capture efficiencies. Most suspensions of particles encountered in industrial practice have a negative zeta potential. This microporous filter membranes characterised by positive zeta potentials are capable in a large number of industrial applications of removing particles much smaller than the pore diameters of the membrane through the mechanism of electrostatic capture.

The desirable hydrophilic properties of the polyamide membranes of U.S. patent specification 4,340,479 are believed to result in part from the high concentration on the exposed membrane surfaces of amine and carboxylic acid end groups of the polyamide. The positioning of these groups is also believed to provide these membranes with their unusual zeta potential versus pH profile. That profile, positive at pHs below 6.5, becomes negative in alkaline media. Accordingly, these membranes have limited ability to filter very fine negatively charges particulates in alkaline media.

By modifying the surface characteristics of the hydrophilic membranes disclosed in U.S. patent specification 4,340,479 to, for instance, provide a strongly positive zeta potential over the alkaline range, the spectrum of uses for these materials in filtration is substantially expanded.

The present invention is directed, then, to a surface-modified, skinless, hydrophilic, microporous, alcohol-insoluble polyamide membrane as recited in claim 1.

The invention also comprises an assembly comprising membranes according to the immediately preceding paragraph, two or more of said membranes being secured to each other and forming a multiple layer membrane filter sheet.

According to the present invention there is also provided a process for preparing a polyamide membrane according to the last but one preceding paragraph comprising the steps of :

(1) preparing a casting solution including (A) a casting resin system comprised of (a) an alcohol-insoluble polyamide resin having a ratio ($CH_2$ :NHCO) of methylene $CH_2$ to amide NHCO groups within the range of from 5 :1 to 7 :1, and (b) a cationic, water-soluble, quaternary ammonium, thermosetting, membrane-surface-modifying polymer and (B) a solvent system in which said casting resin system is soluble ;

(2) inducing nucleation of said casting solution by controlled addition of a non-solvent for said casting resin system under controlled conditions of concentration, temperature, addition rate and degree of agitation to obtain a visible precipitate of casting resin system particles, thereby forming a casting composition ;

(3) spreading said casting composition on a substrate to form a film thereof on the substrate ;

(4) contacting and diluting the film of said casting composition with a liquid non-solvent system for said casting resin system comprised of a mixture of solvent and non-solvent liquids, thereby precipitating on to the substrate said casting resin system from said casting composition in the form of said thin, skinless, hydrophilic, surface-modified, microporous, polyamide membrane ;

(5) washing said membrane to remove the solvent ; and

(6) drying said membrane.

The surface modified, alcohol-insoluble polyamide membranes in accordance with this invention have the unusual property of being hydrophilic, i.e., they are readily wetted by water, have pore sizes (also referred to as pore ratings or pore diameters) of from 0.04 to 10 (preferably 0.1 to 5) micrometers or more, modified zeta potentials, i.e., strongly positive zeta potentials in alkaline media, filtration efficiencies ranging from molecular dimensions (pyrogens) to particulates larger than the pore diameters and, accordingly, are highly desirable as filter media, particularly for producing bacterially sterile filtrates, as well as for filtration of high purity water in microelectronics manufacture due to their ability to deliver ultrapure filtrate free from microparticulates and ionic contaminants.

The membrane surface modifying polymers or resins useful in preparing the membranes in accordance with this invention are the cationic, water-soluble, quaternary ammonium, thermosetting polymers. Preferred polymers within this class are the epoxy-functional polyamide/polyamidoepichlorohydrin resins. The epoxy-functional polyamine epichlorohydrin resins are particularly preferred.

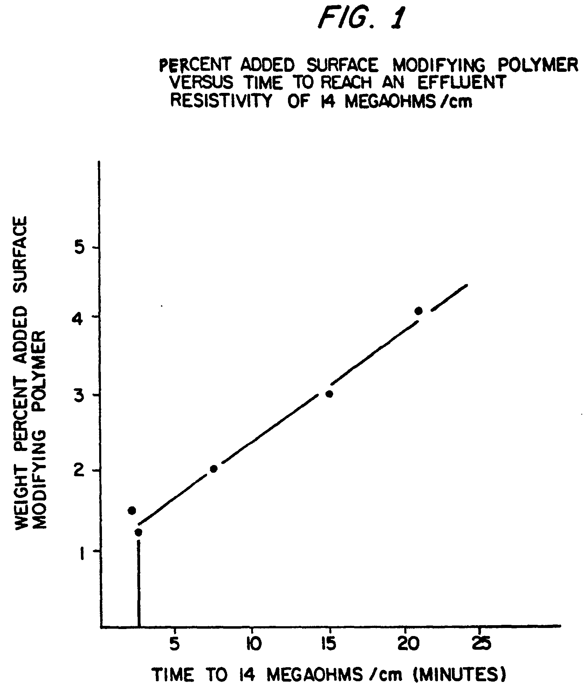

The sole figure is a graph of percent added surface modifying polymer versus time required to obtain 14 megaohms/cm effluent water from a surface modified membrane in accordance with this invention.

The polyamide membranes of U.S. Patent Specification 4,340,479 are prepared from alcohol-insoluble polyamide resins having a methylene to amide ratio in the range of 5 :1 to 7 :1. as are the surface, modified membranes in accordance with this invention. Membranes of this group include copolymers of hexa-methylene diamine and adipic acid (nylon 66), copolymers of hexamethylene diamine and sebacid acid (nylon 610) homopolymers of poly-e-caprolactam (nylon 6) and copolymers of hexamethylene diamine and azelaic acid (nylon 69). Nylon 66 is preferred.

In the process for manufacturing the membranes of the U.S. Patent Specification 4,340,479, the polyamide resin is dissolved in a solvent, such as formic acid, and a non-solvent, such as water, is added under controlled conditions of agitation to achieve nucleation of the solution.

In inducing nucleation of the polyamide solution a visible precipitate is formed. This precipitate may partially or completely redissolve. Preferably, any visible particles which do not redissolve should be filtered out of the system, e.g. with a 10 micrometer filter, prior to casting the nucleated solution or casting composition.

The nucleated solution or casting composition is then cast onto a substrate, e.g., a porous polyester sheet of web or a non-porous polyester sheet, in the form of a film and this film solution is then contacted with and diluted by a liquid non-solvent system which is a mixture of a solvent and a non-solvent for the polyamide resin. A preferred non-solvent liquid system for both the subject invention and that of the U.S. Patent Specification 4,340,479 is a solution of water and formic acid. For this invention, the formic acid is preferably present in an amount of from 35% to 60% by weight. The polyamide resin thereupon precipitates from the solution, forming a hydrophilic membrane sheet on the substrate which can be washed to remove the solvent. The membrane can then be stripped from the substrate and dried or, if the substrate is porous, it can be incorporated in the membrane to serve as a permanent support, in which event it is dried with the membrane. If the substrate is to be incorporated into the membrane, it should be porous and capable of being wetted and impregnated by the casting composition, e.g., a porous, fibrous, polyester sheet with an open structure. By appropriate control of process variables, membranes with through pores of uniform size and shape can be obtained. Conversely, if desired, tapered through pores, wider at one surface of the sheet and narrowing as they proceed toward the

3

opposite surface of the sheet, can be obtained.

The same general procedure described above is followed in manufacturing the surface modified membranes in accordance with this invention except that the membrane surface modifying polymers used in the subject invention are combined with the polyamide resin and the resulting combined modifying polymer/polyamide casting solution, after nucleation to form the casting composition, is cocast resulting in unique membranes with novel filtration properties extending the range of uses for microporous polyamide membranes.

The novel properties of the filter membranes prepared by the process of U.S. Patent Specification 4,340,479 are believed to result in part from the high concentration on the membrane surfaces of amine and carboxylic acid end groups of the polyamide. These amine and carboxylic acid functions on the membrane surfaces result in unexpected membrane properties, such as their unusual zeta potential versus pH profile and their hydrophilic character, that is being readily wetted by water, typically being wetted through in 3 seconds or less, preferably 1 second or less, when immersed in water.

As previously stated, it has now been discovered that the surface modified membranes in accordance with this invention having unexpected and novel filtration properties can be prepared using the general procedure disclosed in U.S. Patent Specification 4,340,479 but with the addition of low levels of selected membrane surface modifying polymers to the polyamide membrane casting solutions. Thus, surface modified, hydrophilic, microporous polyamide membranes with a strongly positive zeta potential in alkaline media, having low levels of extractable matter, and having the ability to deliver ultrapure water, free from microparticulate and ionic contaminants, quickly after the onset of filtration as required in microelectronics manufacture, are readily and economically prepared by the cocasting process in accordance with the present invention.

Addition of as little as one weight percent, based on the polyamide resin, of the membrane-surface-modifying polymer to the membrane casting solution has been found to produce microporous hydrophilic membranes whose surface properties are substantially controlled by the modifying polymer. It is the ability of relatively small amounts of the membrane surface modifying polymer to control the surface properties of membranes in accordance with the present invention which provides the desirable characteristics of the subject membranes. Accordingly, the filtration characteristics and the physiochemical surface behaviour of these membranes are controlled by a surprisingly low proportion of the modifying polymer.

The (1) surface modified, polyamide membranes prepared using the cocasting process share certain characteristics with both (2) the base polyamide membranes prepared using the same general casting process but without the modifying polymer present in the casting solution and (3) base polyamide membranes prepared in the same mamner as the membranes of (2) above but which have subsequently been coated with a cationic polymer or resin by contacting the finished base polyamide membrane with a solution of the cationic polymer or resin.

All three types are skinless, hydrophilic (as hereinbefore defined and in U.S. Patent Specification 4,340,479) and microporous. Each has desirable filtering characteristics for fine particulates derived in part from their fine pore ratings and narrow pore size distributions. Unlike the base polyamide membranes of (2) above, however, the surface modified polyamide membranes of (1) above and the coated polyamide membranes of (3) above exhibit a positive zeta potential in alkaline media which broadens the spectrum of uses of the membranes of (1) and (3).

Surface modified polyamide membranes in accordance with this invention and base polyamide membranes (2) also possess the ability to deliver ultrapure water, free from microparticulate and ionic contaminants, quickly after the onset of filtration. Conversely, the coated polyamide membranes (3) do not have this ability to as great an extent as either (1) or (2). This ability, as described in detail hereinafter, is highly desirable in microelectronics manufacturing applications. Since only the surface modified polyamide membranes (1) in accordance with this invention have the unique combination of a positive zeta potential in alkaline media and the ability to deliver ultrapure water, free from microparticulate and ionic contaminants, quickly upon the onset of filtration, the desirability of this class of membrane is manifest. The highly desirable properties of membranes in accordance with the invention are believed to result from the unique method of preparation in which the modifying polymer becomes an integral part of the overall structure of the membrane. The ability to prepare these membranes in a clean, straightforward, efficient and economic manner heightens their desirability.

The membrane-surface-modifying polymers or resins (sometimes herein referred to as "modifying polymer(s)") useful in processes in accordance with this invention are the cationic, water-soluble, quaternary ammomium, thermosetting polymers. The preferred modifying polymers are those polymers which undergo cross-linking reactions through reaction of epoxide groups. Epoxide functional cationic polymers or resins generally produce charge-modified surfaces which, upon proper conversion to the cross-linked state by the application of heat, are found to be mechanically strong and chemically resistant to a wide range of aggressive chemical environments.

4

Epoxide functional or epoxide-based cationic thermosetting polymers are also preferred due to favourable interactions believed to occur between the amine and carboxylic acid end groups of the polyamide. Amine functions and carboxylic acid functions are known to co-react efficiently with epoxide functional polymers. It is believed that the amine and carboxylic acid groups of the polyamide resin react with the epoxide groups of the modifying polymer. While it is believed that the reaction of these groups occurs throughout the membrane structure, the nature of the membrane forming process is believed to cause preferential orientation of the modifying polymer towards the surfaces of the formed membrane. By this is meant that as a result of the cocasting process in accordance with the invention, the modifying polymer determines the surface characteristics of the membrane. Further, the reaction of the groups is believed to result in intimate bonding of the modifying polymer and the polyamide resin forming an integral structure thereby reducing the amount of extractable matter, increased homogeneity of the surfaces and increased general stability of the membranes.

Another desired characteristic of the modifying polymers relates to the nature of their cationic charge. Since their cationicity stems from the presence of quaternary ammonium groups, they maintain their positive charge in acid, neutral and alkaline conditions of pH.

Surprisingly, during the membrane formation process, the low added levels of modifying polymers appear to be preferentially orientated in such a manner as to result in membranes whose surface characteristics are substantially controlled by the modifying polymer. This result is believed to reflect both the membrane forming process and the hydrophilic nature of the modifying polymers. The combination of their hydrophilicity, their apparent strong interaction with the polyamide end groups and the cocasting process are believed responsible for the apparent preferential orientation of the modifying polymers towards the membrane surface.

Also, surprisingly, while the modifying polymers are highly soluble in water, they are not leached out of the casting composition into the non-solvent liquid, which is used to precipitate the casting resin system. Apparently, the strong inter-action of the modifying polymer with the polyamide end groups coupled with the preferential orientation of the modifying polymer towards the membrane surfaces (both pore and external), perhaps under the influence of the non-solvent liquid, combine to provide a membrane whose surface properties are substantially controlled by the cationic, quaternary ammonium groups of the modifying polymer. The unexpected result is highly desirable.

The epoxy-functional or epoxy-based resins preferred fall into two classes : polyamido/polyamino epichlorohydrin resins and polyamide-epichlorohydrin resins. The former are reaction products of epichlorohydrin with polyamides containing primary, secondary and tertiary amines in the backbone. Representative materials of this class are described in United States Patent Specifications 2,926,154, 3,332,901, 3,224,986, and 3,855,158.

Preferred commercially available water-soluble, non-colloidal cationic thermosetting polymers of the polyamido/polyamino-epichlorohydrin class, are Kymene 557 (Registered Trade Mark) and the Polycup (Registered Trade Mark) series of resins manufactured by Hercules Incorporated. It is believed that these resins are prepared by reacting epichlorohydrin with low molecular weight polyamides which contain amino groups in the polymer backbone. The reaction products have been described as containing quaternary ammonium groups present in the form of azetitinium ions which are four-membered ring structures. Kymene 557 and the members of the Polycup series have been described as being chemically and structurally similar but differing in their molecular weight.

Polyamine-epichlorohydrin resins are condensation products of polyamines such as polyalkylene polyamines or their precursors with epichlorohydrin. They differ from the polyamido/polyamino epichlorohydrin resins in that the polyamine-epichlorohydrins contain no amide linkages as part of the backbone of the polymer. Commercially available compositions of this type are disclosed in (1) U.S. Patent Specification 3,885,158, which discloses polymers prepared by reacting epichlorohydrin with the condensation product of polyalkylene polyamines and ethylene dichloride and in (2) U.S. Patent Specification 3,700,623 which discloses polymers made by reacting epichlorohydrin with polydiallymethylamine. Compositions of the first type are exemplified by Santo-res 31 (Registered Trade Mark) (Monsanto, Inc.) and compositions of the second type are exemplified by Resin R4308 (Hercules Inc.) :

Especially preferred are the epoxide functional water soluble cationic polymers which fall in the class of polyamine-epichlorohydrin resins and which bear quaternary groups in the cured state. The fact that quaternary groups remain in the resin in the cross-linked state is important, since it affects the pH range over which the membrane can maintain a positive zeta potential. A quaternary ammonium group is inherently cationic ; hence its positive charge is independent of its pH environment. Resin R4308 and Santo-res 31 each bear quaternary ammonium groups in the cured state and bear a positive charge at alkaline pH.

Many of the modifying polymers require activation. For the purpose of providing extended shelf life or storage stability to these resins, the epoxide groups are chemically-inactivated to prevent premature crosslinking of these polymers. Thus, prior to the use of these polymers the polymers are activated into the reactive, thermo-setting state by regeneration of the epoxide groups. Typically, activation entails adding sufficient aqueous caustic to a solution of the inactive polymer to chemically convert the inactive chlorohydrin form to the cross-linking epoxide form. The parts by weight of aqueous caustic per weight polymer vary with the product and are specified by the manufacturer. Complete activation is generally achieved in about thirty minutes.

The preparation of membranes in accordance with this invention is carried out under controlled conditions including addition of the non-solvent, e.g., water, to a solution of the polyamide and the modifying polymer, control of the concentration of the constituents, control of the temperature and control of the agitation of the system to induce the proper level of nucleation.

The detailed discussion in U.S. Patent Specification No. 4,340,479 concerning the relationship of the parameters set out above is generally applicable herein and will not be repeated.

The manner and rate of addition of the non-solvent to induce nucleation is interrelated with other process variables, such as intensity of mixing, temperature and the concentration of the various components of the casting solution. The term "casting solution" is used here to mean the solution made up of (A) the casting resin system and (B) the solvent system. Addition of the non-solvent is conveniently carried out through an orifice at a rate sufficient to produce a visible precipitate which, preferably, at least in part subsequently redissolves. Maintaining all other parameters constant, casting compositions with quite different characteristics in terms of pore sizes of the resulting membranes will be obtained by varying the diameter of the orifice. The required degree of nucleation resulting from non-solvent addition rate and orifice configuration is therefore best established by trial and error for each given system.

The controlled addition of non-solvent is discussed in detail in U.S. Patent Specification No. 4,340,479. Prior to addition of the non-solvent to induce nucleation, the casting solution is prepared comprised of (A) a casting resin system comprised of (a) an alcohol-insoluble polyamide resin as hereinbefore described and (b) a modifying polymer or resin and (B) a solvent system. The solvent system may simply be a solvent for the casting resin system, e.g., formic acid. Alternatively, the solvent system contains an amount of a non-solvent, e.g., water. The amount of non-solvent present in the casting solution is always less than the amount necessary to affect the stability of the solution.

Prior to casting, nucleation of the casting solution is initiated by controlled agitation and the controlled addition of non-solvent liquid. The amount and rate of addition of non-solvent is controlled along with the intensity of mixing of agitation. The advantage of including non-solvent as part of the solvent system in making up the casting solution is that better control of the addition of non-solvent can be maintained during the inducement of nucleation because smaller amounts of non-solvent are needed due to the non-solvent already present in the casting solution. As a result, better control of the addition rate can be maintained and a more uniform product of any desired pore size can be obtained.

The casting resin system includes (a) an alcohol-insoluble polyamide resin having a methylene to amide ratio of from 5 :1 to 7 :1 and (b) a surface modifying polymer or resin. All parts and percentages are by weight unless otherwise stated.

The proportion of modifying polymer to polyamide resin in the casting solution formed as the first step in the process, based on the polaymide resin, can vary from as much as 20 weight percent to as little as 0.1 weight percent, that is 20 parts of modifying polymer to 100 parts of polyamide resin ranging to 0.1 part of modifying polymer to 100 parts polyamide resin. The generally preferred range of added modifying polymer is from 1 weight percent to 5 weight percent. Addition levels of 1 to 2.0 weight percent have been found particularly desirable. It is believed that this moderate level of modifying polymer produces substantially complete membrane surface modification resulting in a membrane whose surface characteristics are substantially controlled by the cationic, quaternary, ammomium groups of the modifying polymer. Thus, for the purpose of membrane efficiency and production economy, the addition of 1 to 2.0 weight percent of the modifying polymer, based on the polyamide resin, is preferred with the polyamide resin present in the casting solution in an amount of from 10% to 18% and the surface modifying polymer present in an amount of from 0.1% to 0.9%, (based on all components present in the solution).

The amount of solvent present in the casting solution formed as the first step in the process will vary dependent upon the polyamide resin and the modifying polymer used. In general, the amount of solvent present will range from 60 to 80 weight percent (based on all components present in the solution).

It should be understood that the casting solution comprises both (1) the casting resin system, i.e., the polyamide resin and the modifying polymer or resin and (2) the solvent system, i.e., a solvent for the polyamide resin/modifying polymer casting resin system (such as formic acid) and, if desired, a minor amount of non-solvent for the casting resin system (such as water).

The amount of non-solvent present in the casting solution will in all cases be less than the amount in the liquid non-solvent system (membrane forming bath) used to precipitate the casting resin system from the casting composition, the casting composition being the composition formed from the initially prepared casting solution by inducing nucleation in that solution and, preferably, removing visible particles from the resulting composition. Generally, when the non-solvent is water, it will be present in the casting solution in an amount ranging from zero, preferably at least 5 percent, preferably 10 to 20 percent, and up to 30 percent by weight (again based on all the components present in the solution).

For a preferred casting solution, a polyamine epichlorohydrin resin or polymer, preferably Resin R4308, is present in the casting solution in an amount of from 0.1 to 0.9 percent, polyhexamethylene adipamide is present in an amount of from 10 to 18 percent, formic acid is present in an amount of from 65 to 75 percent, and water is present in an amount of 10 to 20 percent, all parts by weight and based on the total composition of the casting solution.

The temperature of the casting composition is not critical so long as it is maintained at a constant value. Generally, however, a decrease in casting composition temperature produces a higher degree of nucleation.

The intensity of mixing in a given system is a function of a large number of interrelated variables. For any given system, the mixing intensity can be expressed in terms of the rotation rate of the agitator. Such equipment has many forms and designs commonly used in the mixing art and is difficult to quantify. Thus, trial and error experimentation involving customary variables is necessary to establish the operable range of mixing intensities suitable for a particular system. Typically, using a 6.35 cm rotor operating at a throughput of about 500 to 1500 grams of solution per minute requires mixing speeds in the range of from 1500 to 4000 RPM to produce membranes with pore rating in the range of interest.

The liquid non-solvent system used to dilute the film of casting composition and thereby precipitate the casting resin system, typically by immersion in a bath of the liquid non-solvent system, can, and preferably does, contain a substantial amount of a solvent for the casting resin system, preferably the one present in the casting solution. That is, the liquid non-solvent system is comprised of a mixture of a non-solvent for the casting resin system, e.g., water, and a solvent for the casting resin system, e.g., formic acid. However on a percentage basis the amount of solvent present in the liquid non-solvent system will be less than the amount present in the casting solution. Typically, the liquid non-solvent system will be comprised of a non-solvent, e.g., water, present in an amount ranging from 65 to 40 weight percent and a solvent for the casting resin system, e.g., formic acid, present in an amount ranging from 35 to 60 weight percent. The formic acid present in the casting solution may amount to from 60 to 80% and the water present therein from 0 to 30% by weight. More normally expressed the formic acid range is from 65 to 75% and the water range from 10 to 20% by weight. Preferably, the bath of the liquid non-solvent system is maintained at a substantially constant composition with respect to non-solvent and solvent by the addition of non-solvent to the bath, preferably continuously, in a quantity sufficient to compensate for solvent diffusion into the bath from the thin film of casting composition.

The solvent comprising at least part of the solvent system used in the casting solutions can be any solvent for the casting resin system, i.e., the combination of the polyamide resin and the modifying polymer. A preferred solvent is formic acid. Other suitable solvents are other liquid aliphatic acids, such as acetic acid and propionic acid ; phenols, such as phenol ; the cresols and their halogenated derivatives ; inorganic acids, such as hydrochloric, sulfuric and phosphoric ; saturated aqueous or alcohol solutions of alcohol-soluble salts, such as calcium chloride, magnesium chloride and lithium chloride ; and hydroxylic solvents, including halogenated alcohols.

The only criteria in selecting a solvent are that (1) it should form a solution of the polyamide resin and the modifying polymer, (2) it should not react chemically with either the polyamide resin or the surface modifying polymer and (3) it should be capable of ready removal from the surface modified polyamide membrane. Practical considerations also are important, of course. For example, inorganic acids are more hazardous to work with than are others of the named solvents and corrosion problems must be dealt with. Since formic acid meets the criteria listed above and is a practical material as well, it is the solvent of choice. Due to economy and ease of handling, water is the non-solvent of choice for use in the solvent system when a non-solvent is used in the solvent system. In like manner, the preferred non-solvent added to the casting solution to induce nucleation thereof is water. And, the preferred non-solvent component of the liquid non-solvent system used to precipitate the casting resin system from the film of casting composition is also water for the same reasons it is the non-solvent of choice in the solvent system.

The membrane products are characterized by being hydrophilic, skinless, microporous and alcohol-insoluble, with narrow pore size distributions ; filtration efficiencies from molecular dimensions (pyrogens) up to particulates larger than the pore diameters, pore size ratings of from about 0.04 to 10 micrometers, a preferred range being from 0.1 to 5 micrometers, film thicknesses in the range of from 0.01 to 1.5 millimeters, preferably from 0.025 to 0.8 mm, and by having a positive zeta potential over a broad pH range of from 3 to 10. The pores may extend substantially uniformly from surface to surface both in size and shape or they may be wider at one surface than the other and thus taper between the surfaces. Additionally, the membranes can be characterized as having surface properties which are substantially controlled by cationic quaternary ammonium groups of the cationic, quaternary ammonium, thermoset, surface modifying polymer. Surprisingly, the low added levels of quaternary ammonium, surface modifying polymers produce membranes whose surface characteristics substantially reflect the presence of the cationic quaternary ammonium groups. Along with their excellent pore structure and positive zeta potential, these membranes have very low levels of extractable matter making them especially desirable in pharmaceutical and electronic filtration applications. Additionally, these membranes can be conveniently and economically prepared by a straightforward, continuous process as described hereinafter.

The surface modified membranes with moderate or low levels of modifying polymer have rinse up times to deliver effluent water having a resistivity of 14 megaohms/cm of 10 minutes or less, and preferably less than 5 minutes, when tested using the Resistivity Test described hereinafter.

Surface modified membranes, particularly those with moderate or low levels of surface modifying polymers present, are believed to have quick rinse up times because of the apparent interaction between the surface modifying polymer and the polyamide resin end groups. This interaction and the resulting integral nature of membranes in accordance with the invention is believed to lead to a reduction in the extractables available for sloughing off and being carried through the filter and into the effluent, a phenomenon believed to occur with coated membranes.

Method of testing the surface modified membranes of the following examples

The properties of the membranes of the following examples were evaluated by a variety of test methods as described below :

(a) Zeta potential

The zeta potentials of membranes were calculated from measurements of the streaming potential generated by flow of a 0.001 weight percent solution of KCl in distilled water through several layers of the membrane secured in a filter sheet or membrane holder. Zeta potential is a measure of the net immobile electric charge on a membrane surface exposed to a fluid. It is related to the streaming potential generated when the fluid flows through the membrane by the following formula (J. T. Davis et al, *interfacial Phenomena*, Academic Press, New York, 1963) :

$$\text{Zeta Potential (mV)} = \frac{4\pi\eta}{o5D} \cdot \frac{E_s\lambda}{P}$$

Where $\eta$ is the viscosity of the flowing solution, D is its dielectric constant, $\lambda$ is its conductivity, $E_s$ is the streaming potential and P is the pressure drop across the membranes during the period of flow. In the following examples, the quantity

$$\frac{4\pi\eta}{o5D}$$

was constant, having a value $2.052 \times 10^{-2}$, or when converted to Kg./m$^2$, the constant must be multiplied by the conversion factor 703.1 so that the zeta potential can be expressed :

$$\text{Zeta Potential (mV)} = \frac{14.43 \cdot E_s \text{ (Volt)} \cdot \lambda \text{ } (\mu\text{mho/cm})}{P \text{ (Kg/cm}^2)}$$

(b) Capacity of membrane for latex adsorption

A 47 mm diameter disc of membrane was placed in a filter holder with a filtration area of 9.29 cm$^2$ and was then challenged with a suspension of 0.01 weight percent monodisperse latex spheres in a 0.1 weight percent Triton X-100 in water solution (Triton X-100 is an adduct of nonyl phenol with about 10 moles of ethylene oxide). The latex suspension was pumped through the membrane using a Sage Instrument Model 341 syringe pump at a rate of 2 milliliters per minute. The latex effluent was detected by 90 degrees scattering of 537 nm as measured by a Brice-Pheonix BP 2000 light scattering photometer using a flow cell.

The latex solution was pumped through the membrane until the light scattering of the effluent began to differ from that observed for a solution of 0.1% by weight Triton X-100 alone, indicating the start of penetration of latex particles through the membrane. The latex adsorption capacity (LAC) was calculated by the following relation :

$$\text{LAC (mg/cm}^2) = \frac{10 \times V}{929.0}$$

where V is the number of milliliters of 0.01 weight percent latex suspension which could be passed through the membrane until passage of latex was observed.

(c) Bacterial titer reduction

Membranes sterilized by the autoclaving were placed in a suitable stainless steel filter holder and the filter holder with membrane in place was exposed to steam at 123°C for 30 minutes followed by a 60 minute exhaust period in a Vernitron/Better Built Century 21 Model 222 laboratory sterilizer. They were then challenged with bacteria at four levels : $10^6$, $10^8$, $10^{10}$, $10^{12}$ bacteria per square metre for a total challenge of about $10^{12}$ bacteria per square metre of membrane (U.S.P. Bacterial Titer Reduction Test).

The effluent was collected under aseptic conditions in a sterile glass vessel. The number of bacteria in the influent and the effluent was determined by making serial dilutions of these suspensions and plating them on a 0.22 micrometer analytical membrane. These membranes were cultured as Muller-Hinton agar at 38°C for 24 hours to grow colonies of *Serratia Marcescens* and for 48 hours to grow colonies of *Pseudomonas diminuta*.

The colonies growing on the cultured membranes were counted and the number of colonies observed was assumed equivalent to the number of bacteria in the solution plated.

As in the case of latex particle adsorption titer reduction, $T_R$ . is defined as the ratio of influent bacterial count to effluent bacterial count :

$$T_R = \frac{\text{influent count}}{\text{effluent count.}}$$

d) Endotoxin titer reduction test method

A 47 mm, diameter disc of test membrane was prewetted with isopropyl alcohol and placed in a depyrogenated 47 mm, disc holder of filtration area 0.000929 m², (0.01 ft²), which had been previously depyrogenated by heating in an oven at 250°C, for 1 hour. 50 ml pyrogen-free water was passed through the test membrane and the last 3—4 ml were collected in pyrogen-free glassware and saved as a control for the system. The membrane was then challenged with successive 10 ml aliquots of *E. Coli* 055 :B5 purified endotoxin at a flow rate of 5 ml/min/929 cm² and the effluent collected and saved as above. The first aliquot was at a concentration of 1 mg/ml ; each successive portion was 10 times the concentration of the previous one up to a maximum of 100 mg/ml. The influent and effluent solutions were diluted with pyrogen-free water as required and analyzed for the presence of endotoxin by the Limulus Amebocyte Lysate Test (United States Pharmocopeia XX, 1980 page 888).

(e) Resistivity of effluent water

Preliminary preparation

Surface modified, microporous, hydrophilic polyamide membranes were converted to standard cartridge form by conventional procedures to form cartridges having 0.70 s m² (7.5 sq. ft.) of filtering area. The cartridges were then flushed with 0.2 molar ammonium hydroxide at 3.44x1.013x10⁵ Pa (50 psi) pressure across the cartridge for 6 minutes in order to convert the surface modifying polymer to the hydroxide form. The cartridges were then flushed with 1.5 liters of deionized water to remove residual ammonium hydroxide and then dried for 12 hours at 79.4°C (175°F). The cartridges were then ready for testing for their ability to deliver high purity water effluent by the flowing Resistivity Test Method.

Resistivity test

Water of near theoretical resistivity was generated by passing tap water through a Model MA 18090 deionizing bed (Penfield Inc.) and through two Unibed ion exchange beds (Culligan Inc.) Test membranes in the form of standard cartridges were mounted in a cartridge housing of common design and subjected to a flow of approximately 10.8 liters per square metre membrane area per minute using the water from the deionizing system. The effluent water from the elements was monitored for resistivity with a Model 3418 conductivity cell (Yellow Springs Instrument Company). The conductivity cell was connected to a Model 31 conductivity bridge (Yellow Springs Instrument Company) which allowed the direct measurement of effluent resistivity as a function of water flow time. The time in minutes required to reach an effluent resistivity of 14 megaohms per centimeter, the generally accepted water quality limit by the electronics industry, was determined.

General method I for the preparation by continuous casting of the membranes of the following Examples 1—12

Nylon 66 resin pellets were dissolved in 98.5% formic acid. Sufficient activated Resin R4308, as a 5 weight percent solution in water, was added to bring the relative proportion of Resin R4308 to nylon 66 to the desired value. This homogeneous casting solution comprised of (1) the casting resin system, i.e., the nylon 66 plus R4308, and (2) the solvent system, i.e., formic acid plus water, was tested for its viscosity at 30°C on a Rion Viscotester with a number 1 rotor (Model VT-04, available from Extech International Corp., Boston, Mass. U.S.A.) operating at 63.8 r.p.m. The viscosity was found to be about 6 Pa·s (6000 Centipoise). After viscosity testing, the casting solution was delivered by metering pump, at flow rates from 250 grams per minute to about 1500 grams per minute, into an in-line mixer of conventional design having a 6.35 cm rotor whose mixing intensity was controlled over a range of speeds. Simultaneously a non-solvent, water, was added, as indicated for each example, to the mixer by metered injection to produce the desired ratio of formic acid to water and to induce nucleation of the casting solution and obtain a visible precipitate.

Upon exiting the mixer, the resulting casting composition was filtered through a 10 micrometer filter to remove visible resin particles and was then formed into a thin film on a moving, porous, fibrous, polyester, non woven 27.30 cm wide, continuous web by a doctor blade with about 0.0203 cm spacing. Within less than 3 seconds the coated web was immersed into a membrane forming bath of the liquid non-solvent system comprised of a mixture of formic acid and water, as specified for each example, for approximately 1 to 3 minutes. The bath concentration was maintained constant by the continuous addition of water to the bath at the required rate to compensate for solvent diffusion into the bath from the film of the casting composition.

The nylon membrane so formed on the non-woven, porous polyester support was washed with water for from about 3 to about 6 minutes to remove residual formic acid. Excess water was removed from the nylon membrane by passing it between tensioned rubber wiper blades and the membrane was wound into suitably sized rolls for storage or further processing. For filtration application or testing of nylon membrane in flat sheet form, the membrane sheet was mounted in a restraining frame to prevent shrinkage in any direction and the membrane was oven dried to 143.3°C for about 5 minutes. The membranes were also converted to filter cartridges by known methods and subjected to testing or filtration application in cartridge form. All parts and percentages herein are by weight unless otherwise specified.

Example 1

The continuous casting method, described under General Method I above, was employed to produce a surface modified, microporous, hydrophilic polyamide membrane. The casting solution was prepared by mixing about 549 parts of formic acid, 92.2 parts of a 5 weight percent activated Resin R4308 in water and 108.1 parts of nylon 66 resin pellets. The mixture was mechanically agitated until homogeneous.

The casting solution was pumped into an in-line mixer operating at 3600 RPM at the rate of 1000 grams per minute while water was injected into the mixer at the rate of 36.4 grams per minute. The resulting casting composition was then passed through a 10 micrometer filter to remove visible particles. The casting composition was maintained at a temperature of 48.5°C and was delivered onto the polyester web by means of a doctor blade with an approximately 0.020 cm spacing. The web was passed by the doctor blade at approximately 15.2 metres per minute and then into a bath containing 50.1 weight percent formic acid and the balance water. The membrane was then further processed as outlined in Method 1, that is, it was washed and then dried in a restraining frame for 5 minutes at 140 degrees C. and was then ready for filter application or testing.

Example 2

The method of Example 1 was repeated but with the casting solution made up of about 374.5 parts by weight of formic acid, 53.0 parts of 5.82% activated solution of Resin R4308 in water, and 72.5 parts of nylon 66 resin. The casting solution was pumped at a rate of 500 grams per minute into an in-line mixer operating at 2718 RPM while water was injected into it at a rate of 24.9 grams per minute. The resulting casting composition was maintained at 54.0 degrees C. and was cast onto the polyester web moving at 10.1 metres per minute. The web was then immersed in a bath containing 55 percent formic acid, the balance water, and then further processed as described previously until ready for filter application or testing.

Example 3

The method of Example 2 was repeated except that the operating speed of the in-line mixer was 2717 RPM, and that the water was injected into the mixer at a rate of 17.9 grams per minute. The casting composition temperature was controlled at 54.7°C. The coated web was passed into a bath containing 55.4 weight percent formic acid, balance water, at a rate of 10.1 metres per minute. The membrane was then further processed as previously described until ready for filter application or testing.

## Example 4

A casting solution composed of about 73.2 weight percent formic acid, 12.3 weight percent water 14.02 weight percent nylon 66 and 0.43 weight percent activated resin R4308 was prepared by hereinbefore described procedures. The casting solution was pumped into the in-line mixer, operating at 3600 RPM, at the rate of 1000 grams per minute. Water was injected into the mixer at the rate of 32.9 grams per minute and the resulting casting composition was maintained at a temperature of 47.6°C. The polyester web was passed by the doctor blade with a 0.020 cm spacing at the rate of 16.8 metres per minutes and into the bath containing 50.1 weight percent formic acid, balance water. The membrane was then further processed as hereinbefore described until ready for filter application or testing.

## Example 5

The membrane forming process of Example 4 was repeated except that the relative weight nylon 66 and Resin R4308 was adjusted to 2 weight percent Resin R4308 based on the nylon 66, i.e., there were 2 parts of Resin R4308 for 100 parts of nylon 66. The casting solution was delivered to the mixer at the rate of 1000 grams per minute and the resulting casting composition temperature was maintained at 47.5°C. The web, moving at 16.8 metres per minute, was immersed in a bath containing 49.6 weight percent formic acid, balance water. The membrane was then further processed as hereinbefore described until ready for testing or filter application.

## Example 6

The membrane forming process of Example 4 was repeated except that the ratio of Resin R4308 to nylon 66 in the casting solution was adjusted to 1.5 weight percent, i.e., 1.5 parts Resin R4308 to 100 parts nylon 66. Water was introduced into the in-line mixer at the rate of 28.7 grams per minute and the casting composition temperature was maintained at 47.1°C. The web, moving at 18.3 metres per minute, was immersed into a bath containing 50.1 weight percent formic acid and the balance water. The membrane was then further processed as previously described until ready for testing or filter application.

## Example 7

The membrane forming process of Example 4 was repeated except that the ratio of Resin R4308 to nylon 66 was adjusted to 1.25 weight percent in the casting solution, i.e., 1.25 parts Resin R4308 to 100 parts nylon 66. Water was introduced into the mixer at 28.7 grams per minute and the casting composition temperature was maintained at 48.0°C. The web, moving at 16.5 metres per minute, was immersed into a bath containing 50.2 weight percent formic acid, balance water, and then further processed as previously described until ready for testing or filter application.

## Example 8

The method of Example 1 was repeated, but with the casting solution made up of about 487 parts of formic acid, 58.9 parts of a 2 weight percent activated solution of Resin R4308 in water. 9.9 parts of water and 94.0 parts of nylon 66 resin. The casting solution was pumped at a rate of 500 grams per minute into an in-line mixer operating at 2648 RPM while water was injected into it at a rate of 25.3 grams per minute. The resulting casting composition was maintained at 53.7°C and cast onto the polyester web moving at 10.4 metres per minute. The web was then immersed into a bath containing 54 percent formic acid, the balance water, and then further processed as previously described until ready for filter application or testing.

## Example 9

The method of Example 8 was repeated except that the speed of the in-line mixer was 2631 RPM and water was injected into the mixer at a rate of 12.0 grams per minute. The resulting casting composition was maintained at 55.9°C before casting onto the polyester web moving at 9.1 metres per minute. The web was then immersed into a bath containing 54 percent formic acid, the balance water, and then processed as hereinbefore described until ready for filter application or testing.

## Example 10

The method of Example 8 was repeated except that the speed of the in-line mixer was 2719 RPM and water was injected into the mixer at a rate of 4.4 grams per minute. The resulting casting composition was maintained at 58.7°C and cast onto the polyester web moving at 6.7 metres per minute. The web was immersed into a bath containing 54 percent formic acid, the balance water, and then further processed as hereinbefore described until ready for filter application or testing.

## Example 11

The method of Example 8 was repeated except that the speed of the in-line was 2651 RPM and water was injected into the mixer at a rate of 6.5 grams per minute. The resulting casting composition was maintained at 57.4°C and cast onto the polyester web moving at 7.9 metres per minute. The web was immersed into a bath containing 54 percent formic acid, the balance water and then further processed as hereinbefore described until ready for filter application or testing.

## Example 12

The method of Example 2 was repeated except that the speed of the in-line was 2719 RPM and water was injected into the mixer at a rate of 7.5 grams per minute. The resulting casting composition was maintained at a temperature of 57.3°C and cast onto the polyester web moving at 6.7 metres per minute. The web was immersed into a bath containing 55 percent formic acid, the balance water, and was then further processed as described hereinbefore until ready for filter application or testing.

The pore diameters of the membranes of Examples 1—12 and a Control membrane, prepared from nylon 66 without added membrane surface modifying polymer, were determined by KL measurement as described in U.S. Patent Specification 4,340,479 with the results set out in Table 1 below. The zeta potentials and adsorption capacities of the membranes were also determined, by tests (a) and (b) above respectively, with the results set out in Table 1.

TABLE 1

| Membrane of Example | Added weight percent resin R4308 relative to nylon 66 resin | Calculated pore diameter micrometers | Zeta potential in millivolts at pH=7.5 | Adsorption capacity for 0.038 micrometer latex in milligrams per square metre |
|---|---|---|---|---|
| 1 | 4.1 | 0.1 | +15 | 1033 |
| 2 | 4.2 | 0.2 | +22 | 1141 |
| 3 | 4.1 | 0.45 | +19 | 936 |
| 4 | 3.0 | 0.1 | +13 | 743 |
| 5 | 2.0 | 0.1 | +13 | 936 |
| 6 | 1.5 | 0.1 | +12 | 377 |
| 7 | 1.25 | 0.1 | +13 | 560 |
| 8 | 1.25 | 0.2 | +11 | 226 |
| 9 | 1.25 | 0.8 | +18 | 312 |
| 10 | 1.25 | 3 | +12 | 86 |
| 11 | 1.25 | 1.2 | +16 | 248 |
| 12 | 4.2 | 1.2 | +25 | 452 |
| Control | None | 0.1 | −20 | 0 |

The data in Table 1 above demonstrate that the present process of preparing surface modified, microporous, hydrophilic membranes produces membranes with positive zeta potentials in alkaline pH. Furthermore, the data in the table demonstrate that membranes with widely differing physical pore diameters can be prepared by this process. Moreover, the listed adsorption capacities for 0.038 $\mu$m latex spheres, particles whose diameter is much smaller than the pore size (pore diameter) of these membranes, demonstrates the greatly enhanced particulate removal efficiencies of these membranes compared to the control membrane, a microporous, hydrophilic nylon 66 membrane made by the process of U.S. Patent Specification No. 4,340,479. Consequently, the membranes are superior to unmodified membranes in ultra-fine filtration applications.

The membrane of Example 12 was also tested for its ability to remove the bacterium *Serratia Marcescens* from aqueous suspension by the previously described Bacterial Titer Reduction Test Method (test (c) above). For comparative purposes, an identical membrane, but prepared without the added membrane surface modifying polymer, was included in the test evaluation and is designated as Control in Table II.

TABLE II

| Membrane of Example | Serratia Marcescens challenge | |
|---|---|---|
| | Challenge organisms per square metre membrane | Titer reduction |
| 12 | $10^{12}$ | $5.5 \times 10^6$ |
| Control | $10^{12}$ | $5.5 \times 10^1$ |

The results in the above table demonstrate the greatly enhanced (by nearly 100,000 fold) bacterial removal efficiency of filter membranes prepared by the addition of the modifying polymer when compared to a similar Control Membrane but without surface modification.

The membrane of Example 3 was tested for its ability to remove *E. Coli* endotoxin from aqueous suspension by the previously described Endotoxin Titer Reduction Test Method (test (d)). This endotoxin is believed to be of molecular dimensions and exists in rod forms of about 0.001 micrometers in diameter. For comparative pur-

13

poses, a similar membrane prepared without the added membrane surface modifying polymer was included in the test evaluations and is listed as Control in Table III.

### TABLE III

| Membrane of Example | E. Coli endotoxin concentration, in Nanograms per milliliter, required for positive effluent |
|---|---|
| 3 | 100,000 |
| Control | 1 |

Surprisingly, the membranes in accordance with the present invention show extremely large improvements in the removal efficiency of bacterial endotoxins when compared to unmodified membranes. The presence of low levels of membrane surface modifying polymer produces about a 100,000 fold increase in the endotoxin removal efficiency of the membrane.

Unexpectedly, in addition to being able to remove unwanted materials of biological activity, the membranes are able to decrease the adsorptive removal of certain desirable components of filterable pharmaceutical preparations. For example, membranes prepared by the method of Example 2 were tested for their ability to pass a solution of benzalkonium chloride, a commonly used preservative in pharmaceutical products, without undue reduction in the concentration of this substance. An aqueous solution of 0.004 percent by weight of benzalkonium chloride was passed through two layers of 47 mm diameter discs at a rate of 0.7 litres per minute per 929 $cm^2$ and the concentration of the preservative in the effluent relative to that of the influent was determined as a function of throughput volume. For the purpose of comparison, a commercial nylon 66 membrane of the same pore size rating, designated here as Control, was similarly tested.

| Membrane of Example | Pore size (micrometers) | Throughput required to obtain percent of influent concentration (liters per 929 $cm^2$) | |
|---|---|---|---|
| | | 90% | 95% |
| 2 | 0.2 | 1.5 | 3.2 |
| Control | 0.2 | 4 | 5 |

The data in Table IV above illustrates that the effluent of filter membranes reaches acceptable levels substantially before the effluent of the Control. This is of great benefit when filtering such pharmaceutical preparations because there is less wastage of the required amount of preservative.

### General method II

Preparation by batch procedure of the membranes of Examples 13 and 14

In the following examples, polyamide membranes were prepared containing different membrane surface modifying polymers using the following batch procedure. Membrane casting resin solutions were prepared by dissolving nylon 66 resin pellets of the same nylon 66 as used in Examples 1—12 (or other polyamide as specified in the examples) in a solution of formic acid and the desired surface modifying polymer. Dissolution took place with stirring at about 500 RPM in a jacketed resin kettle maintained at 30°C. When dissolution was complete (usually within 3 hours), a non-solvent, water, was added to the solution in an amount sufficient to adjust the final concentration of materials to that given in each example. The water was pumped in at a rate of about 2 ml/min through an orifice about 1 mm in diameter located under the surface of the solution at a point about 1 cm from the stirring blade. Stirring was maintained at about 500 RPM during addition of the water to induce nucleation.

The casting composition was filtered through a 10 micrometer filter, after which about 40 grams of the resulting casting composition was spread out onto a clean glass plate by means of an adjustable gap doctor blade. The film was then promptly immersed in a bath containing formic acid and water in the amounts given in the examples below.

The membranes were held immersed in the bath for several minutes and were then stripped from the glass plate. The membranes were washed in water to remove residual formic acid and were oven-dried for 15 minutes at 96 degrees C. while restrained in a frame to prevent shrinkage. The flat membrane sheets were then used for filter applications or for testing.

Example 13

A membrane was prepared according to General Method II with the surface modifying polymer being Polycup (Registered Trade Mark) 1884, a polyamido/polyamino-epichlorohydrin as described above having (1) a specific gravity of 1.12 and (2) a viscosity of 3250 mPas (325 centipoise) as a 35% aqueous solution. The casting solution contained about 74.2 weight percent formic acid, 10.0 percent water, 14.3 weight percent nylon 66 and 1.43 weight percent Polycup, (Registered Trade Mark) 1884. The casting composition was spread as a film 0.038 cm thick on a glass plate and immersed in a bath containing 54% by weight formic acid, the balance being water. The membrane was then further processed as described above under General Method II.

The membrane prepared was instantly wetted upon contact with water (less than 1 second) and had a pore size of about 1 micrometer, as determined by KL measurement. The zeta potential of the membrane was found to be +2.8 mV at a pH of 8.0.

Example 14

A membrane was prepared according to General Method II with the polyamide resin being poly(hexamethylene azeleamide), (nylon 6,9), and the surface modifying polymer being activated Resin R4308. The casting solution contained about 65.4 weight percent formic acid, 17.7 weight percent water, 16.0 weight percent nylon 6,9 resin and 0.8 weight percent R4308 resin. The casting composition was spread as a film 0.053 cms thick on a glass plate and was immersed in a bath containing 60 percent by weight formic acid, the balance being water. The membrane was then further processed as described above under General Method II.

The membrane of Example 14 was completely wetted immediately upon contact with water (less than 1 second) and had a pore size of 8 micrometers as determined by $K_L$ measurement. The membrane had a zeta potential of +3 mV at a pH of 8.0. Thus, the membrane prepared by this method was microporous, hydrophilic and exhibited a positive zeta potential at alkaline pH.

The continuous membrane preparation procedure (General Method I described above) was used to prepare a number of membranes, each with a pore size of 0.1 micrometer and containing various levels of added Resin R4308. The preparation of these membranes is described in Examples 1, 4, 5, 6 and 7. The membranes were prepared under identical conditions from casting solutions containing from 4 weight percent added Resin R4308 to as little as 1 weight percent. A similar membrane, but without added Resin R4308 was also prepared by the process of U.S. Patent Specification No. 4,340,479 as a comparative example and is designated as Control in the discussion below.

These membranes were tested for their zeta potential at pH=7.5. All of the membranes prepared with added Resin R4308 (from 1.25 to 4.1 weight percent) had a strongly positive zeta potential. The Control membrane, prepared without added Resin R4308, had a strong negative zeta potential under the same measurement conditions. Thus, even low levels added Resin R4308 were found to produce membranes with strong positive zeta potential and improved filtration efficiency toward negatively charged particulates in aqueous suspension.

The membranes of Examples 1, 4, 5, 6 and 7 were also converted into filter cartridges by methods known in the art. These filter cartridges were then flushed with 0.2 molar ammonium hydroxide at 3.52 kg per square cm pressure across the cartridges for a period of 6 minutes, followed by flushing with 1.5 liters of deionized water. They were then dried for 12 hours at 79.4°C. The kilter cartridges were then tested for their ability to deliver, within a short time after onset of filtration, high purity effluent water of extremely low ionic content, a requirement for the filtration of electronics grade water. For comparative purposes, a filter cartridge containing the Control membrane, prepared under similar conditions but without the added surface modifying polymer, was included in the test evaluation and is designed Control in Table V. The times for the effluent of these filter cartridges to reach a resistivity of 14 megaohms, as measured by the Resistivity Test described, above, along with the zeta potentials and particulates adsorption capacities for the filter membranes are also listed in Table V.

TABLE V

| Membrane of Example | Weight percent R4308 added to nylon 66 resin | Zeta potential in millivolts at pH=7 | Adsorption capacity of 0.038 micrometer latex spheres in milligrams per square metre | Time in minutes for effluent to reach 14 megaohms per centimeter resistivity |
|---|---|---|---|---|
| 1 | 4.1 | +15 | 1033.34 | 22 |
| 4 | 3.0 | +13 | 742.71 | 15 |
| 5 | 2.0 | +13 | 936.46 | 7.5 |
| 6 | 1.5 | +12 | 376.73 | 2.0 |
| 7 | 1.25 | +13 | 559.72 | 2.5 |
| Control | None | −20 | 0.0 | 2.5 |

The results in the table show that the membranes have novel properties useful in electronics water filtration when compared to prior art membranes. The present surface modified membranes have positive zeta potentials in alkaline media, vastly improved removal efficiencies for ultrafine particulates and the ability to deliver purified effluent of extremely low ionic content in rapid fashion after the onset of filtration.

The relationship between (1) the time interval, from the onset of filtration, required to produce the required filtrate water resistivity of 14 megaohms/cm (rinse up time as designated in the Resistivity Test described above) and (2) the percent added Resin R4308 is shown in the sole Figure ; a plot of rinse up time versus percent added Resin R4308 for each of the above filter cartridges. The figure illustrates that the rinse up time diminishes linearly with decreasing levels of added Resin R4308. The data in Table V show that at about one to one and one-half percent added Resins R4308 the resulting membrane has a strong positive zeta potential and a rinse up time substantially identical to that of an unmodified membrane. This behaviour is highly desirable since this membrane delivers high resistivity water efficiently and yet provides enhanced filtration efficiency through electrostatic effects.

Example 15

A surface modified, microporous, hydrophilic polyamide membrane prepared according to the process of the subject invention from the nylon 66 as used in Examples 1—12 and Resin R4308 and having a pore rating of 2 micrometers was tested for its ability to remove haze and haze precursors from commercial cherry brandy comprised of 40 percent alcohol by volume. Prior to filtration, the brandy was chilled to about 0°C at which temperature it had a distinct, turbid appearance, indicating the presence of an insoluble, dispersed phase of finely divided haze. The test was carried out by passing the chilled cherry brandy through a filter media comprised of two layers of the microporous membrane described above. That is, a disc, 47 millimeters in diameter, and comprised of two layers of the membrane described above was mounted in a membrane holding device and the chilled cherry brandy was then passed through this filter medium at a rate of 0.5 liters minute per 929 cm² (per square foot) of membrane surface area.

The initial pressure drop across the filter medium was 0.31 x 10⁵ Pa (4.5 psi). After 5 hours onstream, the pressure drop had increased to 0.5 0.496x10⁵ Pa (7.2 psi). Over the 5 hours of filtration, the filter effluent had a crystal clear appearance, without evidence of any haze. The total volume of cherry brandy filtered over the 5 hour period corresponded to 125 liters per 929 cm² (per square foot) of filter medium. After filtration, the cherry brandy was allowed to warm up to ambient temperature. No haze developed. Further, even after recooling, the cherry brandy remained haze free.

This Example demonstrates that a membrane of the subject invention is useful for treating alcoholic beverages to render them haze free and stable against haze formation.

Example 16

To further demonstrate the ability of the membranes in accordance with the subject invention to operate in a clean manner as required in certain filtration applications, such as the manufacture of near theoretical resistivity water for electronics manufacture, a series of elements A—D, as described below, were tested for "extractables" by the process described below.

In this series of tests, corrugated filter elements of conventional design having an effective surface area of about 0.46 m² (5 square feet) were prepared by conventional means from three different microporous membranes. These elements, labelled A through D in Table VI below, were prepared from membranes which themselves were initially prepared by the processes indicated below :

Element

A    A hydrophilic, microporous polyamide membrane with a pore rating of 0.2 micrometers was prepared by the general process described in U.S. Patent Specification 4,340,479 from the same nylon 66 as used in Examples 1—12. The formed membrane was coated with Resin R4308 by impregnating the membrane with a 3 percent by weight solution of R4308 in water, the Resin R4308 having been activated according to the manufacturer's recommendations, following which the membrane was wiped to remove excess resin and thereafter formed into the filter element denoted as element A in Table VI below.

B    The membrane of element B was prepared by the same process as described above with regard to the membrane of element A. This membrane also had a pore rating of 0.2 micrometers.

C    This membrane was prepared by the cocasting process of the subject invention from (1) the same nylon 66 as the membranes of elements A and B above and (2) Resin R4308. The resulting membrane also had a pore rating of 0.2 micrometers and was comprised of 98 percent polyamide and 2 percent by weight Resin R4308.

D (Control)  This Control membrane was prepared by the process described in U.S. Patent 4,340,479 from the same nylon 66 as elements A and B above. The resulting membrane also had a pore rating of 0.2 micrometers. It did not contain a modifying polymer as either (1) an integral part of the structure (as did element C) or (2) a coating component of the membrane (as in the case of elements A and B).

The filter elements A through D as described above were tested as follows :

Elements A and B were each (separately) subjected to a leaching step by passing 1.8962 litres (0.5 U.S. gallons) per minute per element of room temperature, deionized water through the respective element for the time specified in Table VI below. This leaching step was carried out in an effort to remove as much soluble material from elements A and B as possible. Neither element C nor element D was given the benefit of this treatment.

After the water leaching step carried out with elements A and B, each of the elements was individually subjected to a room temperature, deionized water flush at the pressure and for the time specified in Table VI below. Note that the flushing times and pressures resulted in a total flow of water through each individual element of about 189 litres (50 U.S. gallons) (elements A and B) and 227 litres (60 U.S. gallons) (elements C and D).

After the deionized water flushing step, the elements were dried at 96°C (205°F) for about 12 hours, autoclaved with steam at 121°C for about 1 hour and then extracted (again, each element separately) with deionized water. The extraction step was carried out by plugging the bottom of each element and then placing each element in its own bath of one and one-half litres of deionized water, following which each of the elements was reciprocated in an up and down manner (with the top of the filter element rising about 5 centimeters above the upper level of the bath on the up-stroke) for 4 hours.

In each case, the water in the bath was then evaporated and the non-volatile residue remaining behind weighed to determine the extractable material in each filter element. The values are set out in Table VI below.

EP 0 090 483 B2

| Element | Deionized water leach | Deionized water flush | Extractable material (mg) | Zeta potential (mv) |
|---|---|---|---|---|
| A | 30 min. | 5 min. at $1.378 \times 10^5$ Pa (20 psi) | 96 | 18—20 |
| B | 60 min. | 5 min. at $1.378 \times 10^5$ Pa (20 psi) | 68 | 18—20 |
| C | None | 3 min. at $3.44 \times 10^5$ Pa (50 psi) | 27 | 18—20 |
| D | None | 3 min. at $3.44 \times 10^5$ Pa (50 psi) | 25 | —18 |

As can be seen from Table VI, elements C and D had substantially reduced extractables compared with the elements prepared from coated polyamide membranes (A and B). This was the case even though elements A and B were given a deionized water leach (of 30 and 60 minutes respectively). As can also be seen from Table VI, element C, prepared by the cocast process in accordance with this invention, had a low level of extractables comparable to the Control element D. However, element C combines the desirable positive zeta potential at pH 7 (as well as at higher pH levels) with the low extractables of the Control D which has, for many purposes, the undesirable negative zeta potential at pH 7 (and at higher pH values as well).

Industrial applicability

The surface modified membranes hereinbefore described have been demonstrated to be superior in many important filtration related properties to untreated prior art membranes. They are also superior in many respects to coated membranes, e.g., in improved efficiency in utilization of the surface modifying polymer and in certain surface properties of the comparative end products. They can be used for filtering applications in their manufactured form, with or without the incorporation of the substrate upon which they are found. Two or more membranes can be combined or secured to each other to form multiple layer membrane filter sheets or they may be converted into filter elements by known methods and employed in filter cartridges, e.g., as filter elements in the form of a corrugated sheet supported within a conventional cartridge.

The membranes display positive zeta potentials over a broad pH range of from about 3 to about 10 and show greatly enhanced removal efficiencies toward negatively charged particles in aqueous suspension. Furthermore, they have enhanced efficiency to remove bacteria and endotoxins from aqueous fluids. Moreover, the improved physical and chemical properties coupled with their ability to quickly deliver high purity effluent water, free from microparticulate and ionic contaminants, makes them particularly desirable for use in microelectronics manufacture.

These membranes find use in industry and the medical field for treatment of water supplies for critical applications such as water for injection into humans, in microelectronics manufacture for the reasons discussed above, for the filtration of blood serum to help achieve sterility, for filtration of parental fluids, and generally for any use where an ion containing fluid must be filtered to a high degree of clarity.

## Claims

### Claims for the following Contracting States : BE NL SE

1. A surface-modified, skinless, hydrophilic, microporous, alcohol-insoluble polyamide membrane derived from an alcohol-insoluble hydrophobic, polyamide resin having a ratio ($CH_2$ : $NHCO$) of methylene $CH_2$ to amide $NHCO$ groups within the range of from 5 :1 to 7 :1, said membrane having (1) the surface properties thereof substantially controlled by cationic quaternary ammonium groups of a cationic, quaternary ammonium, thermoset, surface-modifying polymer, thereby providing a positive zeta potential in alkaline media, and (2) a time to reach an effluent resistivity of 14 megaohms/cm under the Resistivity Test of 10 minutes or less.

2. A membrane according to claim 1 having through pores extending from surface to surface that are substantially uniform in shape and size.

3. A membrane according to claim 1 having through pores extending from surface to surface that are tapered, being wider at one surface and narrowing as they proceed toward the opposite surface of the membrane.

4. A membrane according to any one of claims 1 to 3 wherein said polyamide resin is polyhexamethylene adipamide, poly-e-caprolactam or polyhexamethylene sebacamide.

5. A membrane according to any one of claims 1 to 4 comprising 80 to 99.9% of the alcohol-insoluble polyamide resin and from 20 to 0.1% by weight of the surface-modifying polymer.

6. An assembly comprising membranes according to any one of claims 1 to 5, two or more of said membranes being secured to each other and forming a multiple layer membrane filter sheet.

7. A process for preparing a surface-modified, skinless, hydrophilic, microporous, alcohol-insoluble polyamide membrane according to claim 1, the process comprising the steps of :

(1) preparing a casting solution including (A) a casting resin system comprised of (a) an alcohol-insoluble polyamide resin having a ratio ($CH_2$ : NHCO) of methylene $CH_2$ to amide NHCO groups within the range of from 5 :1 to 7 :1, and (b) a cationic, water-soluble, quaternary ammonium, thermosetting, membrane-surface-modifying polymer and (B) a solvent system in which said casting resin system is soluble ;

(2) inducing nucleation of said casting solution by controlled addition of a non-solvent for said casting resin system under controlled conditions of concentration, temperature, addition rate and degree of agitation to obtain a visible precipitate of casting resin system particles, thereby forming a casting composition ;

(3) spreading said casting composition on a substrate to form a film thereof on the substrate ;

(4) contacting and diluting the film of said casting composition with a liquid non-solvent system for said casting resin system comprised of a mixture of solvent and non-solvent liquids, thereby precipitating on to the substrate said casting resin system from said casting composition in the form of said thin, skinless, hydrophilic, surface modified, microporous, polyamide membrane ;

(5) washing said membrane to remove the solvent : and

(6) drying said membrane.

8. A process according to claim 7 wherein the precipitated casting resin system particles are redissolved or are filtered out before spreading said casting composition on said substrate.

9. A process according to claim 7 or 8 wherein said polyamide resin is polyhexamethylene adipamide, poly-e-caprolactam, or polyhexamethylene sebacamide.

10. A process according to any one of claims 7 to 9 wherein said solvent system for said casting resin system comprises formic acid, and said non-solvent added to induce nucleation is water.

11. A process according to any one of claims 7 to 10 wherein said solvent system for said casting resin system comprises formic acid and water.

12. A process according to any of claims 7 to 11 wherein said membrane-surfacing-modifying polymer is a polyamine epichlorohydrin polymer, or a polyamido/polyaminoepichlorohydrin polymer.

13. A process according to any one of claims 7 to 12 wherein said casting composition is continuously spread onto said substrate, said film of said casting composition is continuously immersed in a bath of said liquid non-solvent system, and the bath is maintained at a substantially constant composition with respect to non-solvent and solvent by the addition of non-solvent to the bath in a quantity sufficient to compensate for solvent diffusion into the bath from said film of said casting composition.

14. A process according to claim 13 wherein the substrate is a porous web having an open structure which is wetted and impregnated by the casting composition, thereby forming a membrane film having the porous web incorporated as a part thereof.

15. A process according to any one of claims 7 to 14 wherein the substrate is stripped from the membrane when the process has been completed.

**Patentansprüche**

**Patentanspruche für folgenden Vertrasstaaten : BE NL SE**

1. Eine oberflächenmodifizierte, hautfreie, hydrophile, mikroporöse, alkoholunlösliche Polyamidmembran als Derivat eines alkoholunlöslichen, hydrophoben Polyamidharzes mit einem ($CH_2$ :NHCO)-Verhältnis von Methylen-$CH_2$ zu Amid-NHCO-Gruppen im Bereich von 5 :1 bis 7 :1, wobei die besagte Membran eine integrale Mikrostruktur aufweist, deren kennzeichnenden Oberflächeneigenschaften wesentlich durch kationische, quartäre Ammoniumgruppen eines kationischen, aushärtenden, oberflächenmodifizierenden, in der Membran homogen verteilten Quartärammoniumpolymers bestimmt werden und deshalb durch ein positives Zetapotential in alkalischen Medien gekennzeichnet sind, und anhand des Resistivitätstests eine Membranausflußresistivität von 14 Megaohm/cm mit einem Zeitwert von höchstens 10 Minuten erzielt wird.

2. Eine Membran entsprechend Anspruch Nr. 1, die durch Durchgangsporen zwischen Oberflächen von wesentlich gleichmäßiger Form und Größe gekennzeichnet ist.

3. Eine Membran entsprechend Anspruch Nr. 1 mit sich von Oberfläche zu Oberfläche erstreckenden Durchgangsporen von kegelförmiger Gestalt, da sich die Poren entlang ihrer Ausdehnung zwischen den gegenüberliegenden Membranoberflächen fortschreitend verjüngen.

4. Eine Membran entsprechend Anspruch Nr. 1 bis 3, deren besagter Polyamidharz ein Polyhexamethylen-Adipinsäureamid, Poly-E-Kaprolactam oder Polyhexamethylen-Sebazinsäureamid ist.

5. Eine Membran entsprechend Anspruch Nr. 1 bis 4 aus 80 bis 99,9 % alkoholunlöslichem Polyamidharz und 20 bis 0,1 Gewichtsprozent oberflächenmodifizierendem Polymer.

6. Ein Membranaufbau entsprechend Anspruch Nr. 1 bis 5, für welchen mindestens zwei der besagten Membranen aneinander befestigt werden und dadurch eine viellagige Membranfilterbahn bilden.

7. Ein Herstellungsverfahren für eine oberflächenmodifizierte, hautfreie, hydrophile, mikroporöse, alkoholunlösliche Polyamid-Membran enhtsprechend Anspruch Nr. 1 in den folgenden Stufen :

(1) Vorbereitung einer Gießlösung aus

(A) einem Vergießharz, der sich aus (a) einem alkoholunlöslichen Polyamidharz mit einem $(CH_2 : NHCO)$-Verhältnis von Methylen-$CH_2$ zu Amid-NHCO-Gruppen im Bereich von 5 :1 bis 7 :1 und (b) einem kationischen, wasserlöslichen, aushärtenden Quartärammoniumpolymer mit Modifizierung der Membranoberfläche zusammensetzt,
und aus

(B) einem Lösungssystem, in dem das besagte Vergießharzsystem löslich ist ;

(2) zwecks Induzierung der Nukleierung der besagten Vergießlösung durch den geregelten Zusatz eines Nichtlösungsmittels zu dem besagten Vergießharzsystem unter geregelten Konzentrations-, Temperatur-, Zusatzmengen- und Rührstufenbedingungen, um eine sichtbare Präzipitatbildung von Vergießharzteilchen auszulösen und dadurch eine Vergießmasse zu bilden ;

(3) Bestreichen eines Substrats mit der besagten Vergießmasse, um auf dem Substrat einen Film zu bilden;

(4) Bearbeitung und Verdünnung des besagten Vergießmassenfilms im Kontaktverfahren mit einem flüssigen Nichtlösungsmittelsystem für das besagte Vergießharzsystem aus einer Mischung von löslichen und nichtlöslichen Flüssigkeiten, um das besagte Vergießharzsystem der besagten Vergießmasse auf dem Substrat in Gestalt der besagten dünnen, hautfreien, hydrophilen, oberflächenmodifizierten, mikroporösen Polyamidmembran abzuscheiden ;

(5) Entfernung des Lösungsmittels durch Waschen der besagten Membran ;
und

(6) Trocknen der besagten Membran.

8. Ein Verfahren entsprechend Anspruch Nr. 7, das dadurch gekennzeichnet ist, daß das Teilchenpräzipitat des Vergießharzsystems vor Bestreichen des besagten Substrats mit der besagten Vergießmasse entweder wieder gelöst oder ausgefiltert wird.

9. Ein Verfahren entsprechend Anspruch Nr. 7 oder 8, das dadurch gekennzeichnet ist, daß der besagte Polyamidharz ein Polyhexamethylen-Adipinsäureamid, Poly-E-Kaprolactam oder Polyhexamethylen-Sebazinsäureamid ist.

10. Ein Verfahren entsprechend Anspruch Nr. 7 bis 9, das dadurch gekennzeichnet ist, daß das besagte Lösungsmittelsystem für das besagte Vergießharzsystem Formylsäure enthält und Wasser als das besagte Nichtlösungsmittel zwecks Auslösung der Nukleierung zugegeben wird.

11. Ein Verfahren entsprechend Anspruch Nr. 7 bis 10, das dadurch gekennzeichnet ist, daß das besagte Lösungsmittelsystem für das besagte Vergießharzsystem aus Formylsäure und Wasser besteht.

12. Ein Verfahren entsprechend Anspruch Nr. 7 bis 11, das dadurch gekennzeichnet ist, daß das besagte Modifikationspolymer der Membranoberfläche ein Polyamin-Epichlorhydrin-Polymer oder ein Polyamid/Polyamin-Epichlorhydrin-Polymer ist.

13. Ein Verfahren entsprechend Anspruch Nr. 7 bis 12, das dadurch gekennzeichnet ist, daß die besagte Vergießmasse kontinuierlich auf das besagte Substrat gestrichen wird, wobei der besagte Vergießmassenfilm kontinuierlich in eine Wanne mit der besagten Nichtlösungsflüssigkeit getaucht wird und der lösliche bzw. nichtlösliche Inhalt der Wanne in wesentlich konstanter Zusammensetzung gehalten wird, indem ihr eine ausreichende Menge Nichtlösungsmittel zugegeben wird, um die in der Wanne erfolgende Lösungsmitteldiffusion aus dem besagten Vergießmassenfilm auszugleichen.

14. Ein Verfahren entsprechend Anspruch Nr. 13, das dadurch gekennzeichnet ist, daß das Substrat ein poröses Gewebe mit offener Struktur ist, so daß - wenn dieses Gewebe durch die Vergießmasse benetzt und imprägniert wird - ein Membranfilm gebildet wird, der sich durch das gleiche poröse Gewebe auszeichnet.

15. Ein Verfahren entsprechend Anspruch Nr. 7 bis 14, das dadurch gekennzeichnet ist, daß das Substrat nach Vollendung des Verfahrens von der Membran geschält wird.

## Revendications

**Revendications pour les Etats contractants suivants : BE NL SE**

1. Membrane en polyamide à surface modifiée, sans peau, hydrophile, microporeuse, insoluble dans l'alcool, dérivée d'une résine polyamide hydrophobe, insoluble dans l'alcool, ayant un rapport ($CH_2$ : NHCO) méthylène $CH_2$ aux groupes amides NHCO dans la gamme de 5 : 1 à 7 : 1, ladite membrane ayant une microstructure intégrale dont les propriétés de surface caractéristiques sont substantiellement commandées par des groupements ammonium cationiques quaternaires d'un polymère cationique, à ammonium quaternaire, durcissant à la chaleur, modificateur de charge de surface, distribué de manière homogène sur toute la membrane, assurant ainsi un potentiel zêta positif en milieux alcalins, et la membrane nécessitant un certain temps pour atteindre une résistivité d'écoulement de 14 mégohms/cm conformément à l'essai de résistivité de 10 minutes ou moins.

2. Membrane selon la revendication 1 ayant des pores la traversant entièrement s'étendant de surface à surface qui sont essentiellement uniformes quant à leurs forme et grandeur.

3. Membrane selon la revendication 1 ayant des pores la traversant entièrement s'étendant de surface à surface qui vont en diminuant, étant plus larges à une surface de la feuille et s'mincissant à mesure qu'ils se rapprochent de la surface opposée de la membrane.

4. Membrane selon l'une ou l'autre des revendications 1 à 3, caractérisée en ce que ladite résine polyamide est un adipamide polyhexaméthylènique, poly-e-caprolactame ou sébacamide polyhexaméthylènique.

5. Membrane selon l'une ou l'autre des revendications 1 à 4 comprenant de 80 à 99,9% de la résine polyamide insoluble dans l'alcool et de 20 à 0,1% en poids du polymère modificateur de surface.

6. Ensemble comprenant des membranes selon l'une ou l'autre des revendications 1 à 5, deux ou plus desdites membranes étant fixées l'une à l'autre et constituant une feuille filtrante à membrane à couches multiples.

7. Procédé de préparation d'une membrane en polyamide à surface modifiée, sans peau, hydrophile, microporeuse, insoluble dans l'alcool, polyamide, selon la revendication 1, le procédé comprenant les stades de :

(1) préparation d'une solution de coulée comprenant (A) un système résine de coulée se composant de (a) une résine polyamide insoluble dans l'alcool ayant un rapport ($CH_2$ :NHCO) méthylène $CH_2$ aux groupes amides NHCO dans la gamme de 5 :1 à 7 :1, et (b) un polymère cationique, hydrosoluble, ammonium quaternaire, thermodurcissant, modificateur de surface de membrane, et (B) un système solvant dans lequel ladite résine decoulée est soluble ;

(2) induction de la nucléation de ladite solution de coulée par l'addition surveillée d'un non-solvant pour ledit système de résine de coulée dans des conditions surveillées de concentration, température, taux d'addition et degré d'agitation pour obtenir un précipité visible de particules de système de résine de coulée, en constituant ainsi une composition de coulée ;

(3) étalement de ladite composition de coulée sur un support pour former une pellicule de ladite composition sur le support ;

(4) mise en contact et dilution de la pellicule de ladite composition de coulée avec un système liquide non-solvant pour ledit système de résine de coulée se composant d'un mélange de liquides solvants et non-solvants, en précipitant ainsi sur le support ledit système de résine de coulée de ladite composition de coulée sous forme de ladite membrane mince, sans peau, hydrophile, à surface modifiée, micro-poreuse en polyamide ;

(5) lavage de ladite membrane pour éliminer le solvant, et

(6) séchage de ladite membrane.

8. Procédé selon la revendication 7, caractérisé en ce que les particules de système de résine de coulée précipitées sont dissoutes à nouveau avant l'étalement de ladite composition de coulée sur ledit support, ou sont enlevées par filtrage.

9. Procédé selon la revendication 7 ou 8, caractérisé en ce que ladite résine polyamide est un adipamide polyhexaméthylènique, poly-e-caprolactame, ou sabacamide polyhexaméthylènique.

10. Procédé selon l'une ou l'autre des revendications 7 à 9, caractérisé en ce que ledit système solvant pour ledit système de résine de coulée comprend de l'acide formique, et en ce que ledit non-solvant ajouté pour induire la nucléation est de l'eau.

11. Procédé selon l'une ou l'autre des revendications 7 à 10, caractérisé en ce que ledit système solvant pour ledit système de résine de coulée comprend de l'acide formique et de l'eau.

12. Procédé selon l'une ou l'autre des revendications 7 à 11, caractérisé en ce que ledit polymère modificateur de surface de membrane est un polymère polyamine épichlorhydrine, ou un polymère polyamido-polyamino-épichlorhydrine.

13. Procédé selon l'une ou l'autre des revendications 7 à 12, caractérisé en ce que ladite composition de coulée est étalée de manière continue sur ledit support, ladite pellicule de ladite composition de coulée est plongée de manière continue dans un bain dudit système liquid non-solvant, et en ce que le bain est maintenu à un degré de composition essentiellement constant à l'égard des non-solvants et solvants par l'addition de non-solvant au bain en une mesure suffisante pour compenser la diffusion de solvant dans le bain de ladite pellicule de ladite composition de coulée.

14. Procédé selon la revendication 13, caractérisé en ce que le support est un tissu poreux ayant une structure ouverte qui est humecté et imprégné par la composition de coulée, en formant ainsi une pellicule membrane avec laquelle le tissu poreux est incorporé pour en faire partie.

15. Procédé selon l'une ou l'autre des revendications 7 à 14, caractérisé n ce que le support est enlevé de la membrane lorsque le procédé est terminé.

## FIG. 1

PERCENT ADDED SURFACE MODIFYING POLYMER
VERSUS TIME TO REACH AN EFFLUENT
RESISTIVITY OF 14 MEGAOHMS /cm

TIME TO 14 MEGAOHMS /cm (MINUTES)